# EUROPÄISCHE PATENTSCHRIFT

(11) **EP 3 274 574 B1**
(45) Veröffentlichungstag und Bekanntmachung des Hinweises auf die Patenterteilung: **12.12.2018**
(21) Anmeldenummer: 16702359.7
(22) Anmeldetag: 25.01.2016
(51) Int. Cl.: F02B 75/04, F16D 1/08, F16C 7/06

(54) **PLEUEL MIT WELLE-NABE-VERBINDUNG**
CONNECTING ROD WITH SHAFT-HUB CONNECTION
BIELLE AVEC LIAISON ARBRE-MOYEU

(30) Priorität: 25.03.2015 DE 102015104544
(43) Veröffentlichungstag der Anmeldung: 31.01.2018
(73) Patentinhaber: Hilite Germany GmbH, 97828 Marktheidenfeld (DE)
(72) Erfinder: KAUFMANN, Dietmar, 97837 Tiefenthal (DE)
(86) Internationale Anmeldenummer: PCT/EP2016/051396
(87) Internationale Veröffentlichungsnummer: WO 2016/150589

(56) Entgegenhaltungen:
- EP-A1- 0 530 890
- WO-A1-92/16763
- DE-A1- 4 130 031
- DE-A1-102013 211 936
- DE-U1-202013 004 236

## Beschreibung

### Technisches Gebiet

Die Erfindung betrifft eine Welle-Nabe-Verbindung mit einem Hebel und einem in eine Öffnung des Hebels eingesetzten Lagerbauteil sowie ein Pleuel mit einer Welle-Nabe-Verbindung.

### Stand der Technik

Bei Brennkraftmaschinen wirkt sich ein hohes Verdichtungsverhältnis positiv auf den Wirkungsgrad des Verbrennungsmotors aus. Unter Verdichtungsverhältnis wird im Allgemeinen das Verhältnis des gesamten Zylinderraumes vor der Verdichtung zum verbliebenen Zylinderraum nach der Verdichtung verstanden. Bei Brennkraftmaschinen mit Fremdzündung, insbesondere Ottomotoren, die ein festes Verdichtungsverhältnis aufweisen, darf das Verdichtungsverhältnis jedoch nur so hoch gewählt werden, dass bei Volllastbetrieb ein sogenanntes "Klopfen" der Brennkraftmaschine vermieden wird. Jedoch könnte für den weitaus häufiger auftretenden Teillastbereich der Brennkraftmaschine, also bei geringer Zylinderfüllung, das Verdichtungsverhältnis mit höheren Werten gewählt werden, ohne dass ein "Klopfen" auftreten würde. Der wichtige Teillastbereich einer Brennkraftmaschine kann verbessert werden, wenn das Verdichtungsverhältnis variabel einstellbar ist. Zur Verstellung des Verdichtungsverhältnisses sind beispielsweise Systeme mit variabler Pleuellänge bekannt.

Aus der DE 10 2005 055 199 A1 ist ein Pleuel bekannt, bei dem im kleinen Pleuelauge ein schwenkbarer Hebel eingesetzt ist, in dessen zentraler Öffnung ein Exzenter eingesetzt ist. Der Exzenter dient zur Aufnahme eines Kolbenbolzens. Der Hebel bildet mit dem Exzenter eine Welle-Nabe-Verbindung, wobei beide Bauteile eine Zahnreihe aufweisen und somit Hebel und Exzenter durch eine Verzahnung verbunden sind. Da die Verbindung im Betrieb des Pleuels hoch belastet wird, sind die Anforderungen an die Fertigungstoleranzen der Verbindungspartner hoch. Aus der WO 92 / 16763 A1 ist eine Welle-Nabe-Verbindung bekannt.

### Offenbarung der Erfindung

Eine Aufgabe der Erfindung ist es, ein Pleuel mit einer hochbelastbaren Welle-Nabe-Verbindung mit wenig Spiel zwischen den Verbindungspartnern zu schaffen.

Die vorgenannte Aufgabe wird mit den Merkmalen des unabhängigen Anspruchs gelöst.

Günstige Ausgestaltungen und Vorteile der Erfindung ergeben sich aus den weiteren Ansprüchen, der Beschreibung und der Zeichnung.
Es wird eine Welle-Nabe-Verbindung mit einem Hebel und einem in einer Öffnung des Hebels angeordneten Lagerbauteil eines Pleuels vorgeschlagen, wobei die Öffnung so ausgestaltet ist, dass wenigstens drei Kontaktstellen zwischen Hebel und Lagerbauteil ausgebildet sind und zwischen jeweils zwei Kontaktstellen ein Freiraum ausgebildet ist, an dem die Öffnung vom Lagerbauteil gezielt beabstandet ist.
Gezielt beabstandet bedeutet, dass der Grundriss der Öffnung des Hebels, die das Lagerbauteil aufnehmen soll, in den beabstandeten Bereichen größer ist als der Grundriss des Lagerbauteils. Vorteilhaft ist die Verbindung spielfrei und weist gute dynamische Eigenschaften auf und ermöglicht eine Übertragung von hohen Drehmomenten. Im Vergleich zu einer Verzahnung, bei der an beiden Verbindungspartnern jeweils eine Zahnreihe ausgebildet werden muss, ist die Verbindung erheblich weniger aufwändig herzustellen. Die Montage von Hebel und Lagerbauteil ist vereinfacht. Das Lagerbauteil ist ein Exzenter, in dem beim Einbau in eine Brennkraftmaschine ein Kolbenbolzen aufgenommen werden soll.

Die Öffnung ist als nicht kreisrunder Polygonzug ausgebildet. Vorteilhaft sind benachbarte Streckenabschnitte durch einen Punkt mit einem Richtungswechsel von einem zum anderen Streckenabschnitt getrennt. Die Öffnung kann grundsätzlich einen beliebigen Grundriss aufweisen. Es kann eine für den Grundriss des Hebels günstige Kontur gewählt werden, die Anforderungen an den Platzbedarf für die Verbindung und an die Festigkeit des Hebels Rechnung tragen kann. Durch die Wahl eines geeigneten Polygonzugs kann Verbindung raumsparend und dynamisch belastbar ausgeführt werden. Auch kann eine Selbstzentrierung der beiden Verbindungspartner erreicht werden.
Nach einer günstigen Ausgestaltung kann die Öffnung einen Dreiecksgrundriss aufweisen, insbesondere einen Dreiecksgrundriss mit gerundeten Ecken. Dabei können die Linien, welche die Ecken verbinden, gekrümmt sein. Durch die Wahl einer geeigneten Platzierung im Grundriss des Hebels kann die Verbindung besonders raumsparend ausgeführt werden. Die Stabilität des Hebels wird nicht geschwächt. Nach einer günstigen Ausgestaltung kann das Lagerbauteil eine als Polygonzug ausgebildete Außenseite aufweisen. Vorteilhaft kann das Lagerbauteil eine Grundrissart aufweisen, die vergleichbar mit der der Öffnung ist. Dies erlaubt eine besonders genaue Positionierung des Lagerbauteils und Selbstzentrierung der beiden Verbindungspartner. Es kann an den Kontaktstellen ein Formschluss erreicht werden. Die Verbindung ist noch stabiler und belastbarer.
Nach einer günstigen Ausgestaltung kann das Lagerbauteil einen Dreiecksgrundriss aufweisen, insbesondere einen Dreiecksgrundriss mit gerundeten Ecken. Dabei können die Linien, welche die Ecken verbinden, gekrümmt sein. Dies erlaubt eine besonders genaue Selbstzentrierung der beiden Verbindungspartner. Es kann an den Kontaktstellen ein Formschluss erreicht werden. Die Verbindung ist noch stabiler und belastbarer.
Nach einer günstigen Ausgestaltung kann das Lagerbauteil vor dem Einsetzen in die Öffnung einen lichten Außendurchmesser aufweisen, der bei gleicher Temperatur von Hebel und Lagerbauteil größer ist als eine lichte Weite der Öffnung zur Aufnahme des Lagerbauteils. Die Verbindung kann spielfrei hergestellt werden.
Nach einer günstigen Ausgestaltung kann das Lagerbauteil in die Öffnung eingeschrumpft ist. Die Verbindungspartner werden verpresst. Die Verbindung weist eine vorteilhaft geringe Kerbwirkung auf. Durch den Kraftschluss zwischen den Verbindungspartnern ist die Verbindung spielfrei, und es können hohe Drehmomente übertragen werden. Dabei kann das Lagerbauteil abgekühlt werden, so dass dessen Durchmesser schrumpft und in den wärmeren Hebel eingeschoben werden. Bei der anschließenden Erwärmung expandiert das Lagerbauteil und verspannt sich in der Öffnung sicher gegen den Hebel.
Nach einer günstigen Ausgestaltung kann das Lagerbauteil eine geschliffene Außenfläche aufweisen. Die Außenfläche kann mit hoher Qualität und Formtreue hergestellt werden.
Nach einer günstigen Ausgestaltung kann das Lagerbauteil aus einem hochfesten Stahl gebildet sein.

Die Herstellung des Pleuels ist durch die vereinfachte und verbesserte Welle-Nabe-Verbindung von Hebel und Lagerbauteil kostengünstiger bei verbesserter Qualität der Verbindung.

### Kurze Beschreibung der Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

### Es zeigen beispielhaft:

- Fig. 1: in Explosionsdarstellung eine Welle-Nabe-Verbindung bei einem Pleuel nach dem Stand der Technik;
- Fig. 2: eine Welle-Nabe-Verbindung nach einem Ausführungsbeispiel der Erfindung; und
- Fig. 3: ein Detail der Welle-Nabe-Verbindung aus Figur 2 in Draufsicht.

### Ausführungsformen der Erfindung

In den Figuren sind gleiche oder gleichartige Komponenten mit gleichen Bezugszeichen beziffert. Die Figuren zeigen lediglich Beispiele und sind nicht beschränkend zu verstehen.

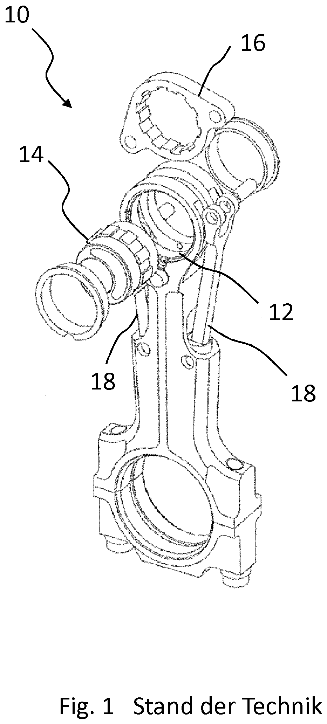

Das bekannte Pleuel 10 in Figur 1 weist ein oberes Pleuellagerauge 12 auf, das zur Aufnahme eines nicht dargestellten Kolbenbolzens vorgesehen ist. Dieser Kolbenbolzen ist in üblicher Weise fest in einen Brennraumkolben des Verbrennungsmotors eingesteckt. Das obere Pleuellagerauge 12 ist durch eine Pleuelstange von dem in der Figur unteren, großen Pleuellagerauge getrennt.

Das obere Pleuellagerauge 12 ist mittels eines als Exzenter 14 ausgebildeten Lagerbauteils um eine Schwenkachse schwenkbar, die parallel versetzt zur Längsachse des oberen Pleuellagerauges 12 liegt. Dazu ist der Exzenter 14 in eine Öffnung 12 eines Hebels 16 eingesetzt. Zur Herstellung einer möglichst spielfreien Verbindung weisen sowohl der Hebel 16 eine innere Zahnreihe als auch der Exzenter 14 eine äußere Zahnreihe auf, die ineinander greifen. Somit ist es möglich, das obere Pleuellagerauge 12 in seinem Abstand zu einer Pleuellagerachse des in der Figur unteren Pleuellagerauges zu verändern und über die am oberen Pleuellagerauge 12 gelagerten Stellkolben 18 eine variable Verdichtung im Brennraum zu verwirklichen.

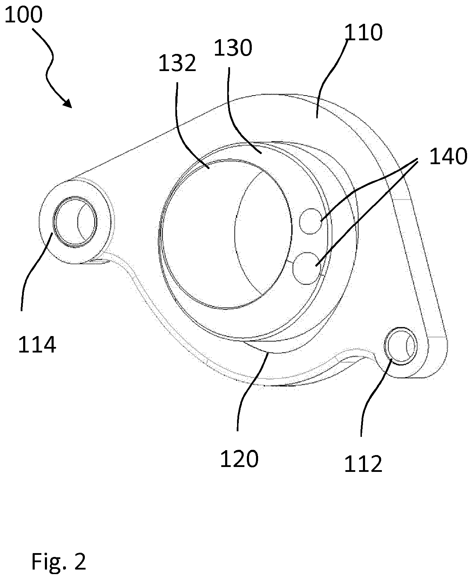

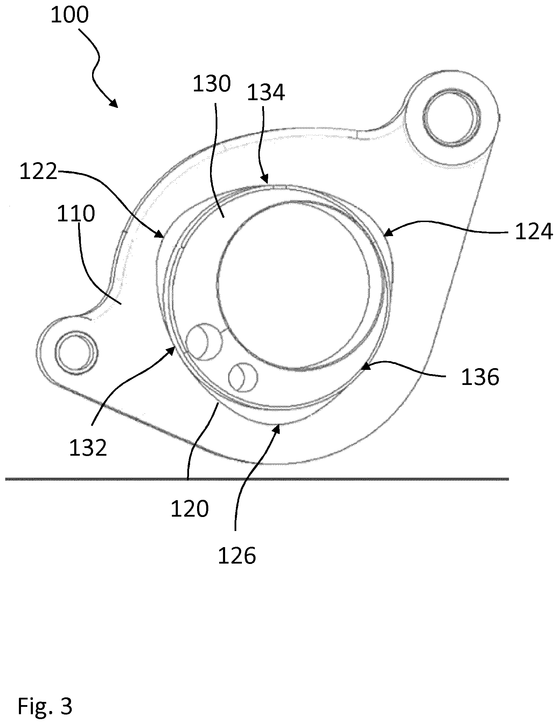

Figur 2 zeigt eine perspektivische Ansicht einer Welle-Nabe-Verbindung 100 nach einem Ausführungsbeispiel der Erfindung, und Figur 3 zeigt eine Draufsicht auf die Welle-Nabe-Verbindung 100 aus Figur 2.

Die Welle-Nabe-Verbindung 100 umfasst einen Hebel 110 mit einer Öffnung 120 und ein Lagerbauteil 130, das in der Öffnung 120 angeordnet ist. Beidseits der Öffnung 120 ist jeweils eine Öffnung 112, 114 ausgebildet, in denen im normalen Gebrauchszustand zeichnerisch nicht ausgeführte Stellkolben gelagert sind.

Die Öffnung 120 ist als Polygonzug mit Dreiecksgrundriss mit gerundeten Ecken so ausgestaltet, dass das Lagerbauteil 130 drei Kontaktstellen 132, 134, 136 zwischen Hebel 110 und Lagerbauteil 130 ausbildet sind und zwischen den Kontaktstellen 132, 134, 136 jeweils ein Freiraum 122, 124, 126 ausgebildet ist, an dem die Öffnung 120 vom Lagerbauteil 130 beabstandet ist. Das Lagerbauteil 130 weist eine Öffnung 132 zur Aufnahme eines üblichen Kolbenbolzens auf (nicht dargestellt). Die Freiräume 122, 124, 126 ergeben auch eine Gewichtsersparnis der Nabe-Welle-Verbindung 100.

Das als Exzenter ausgebildete Lagerbauteil 130 weist ebenfalls einen Querschnitt auf, der als Polygonzug ausgebildet ist, z.B. mit Dreiecksgrundriss mit gerundeten Ecken entsprechend der Öffnung 120. Die Abweichung von der Kreisform ist nicht so stark ausgebildet wie bei der Öffnung 12. Kleine Bohrungen 140 im Seitenbereich des Lagerbauteils 130 dienen der Gewichtsreduzierung des Lagerbauteils 130.

Das Lagerbauteil 130 weist vor dem Einsetzen in die Öffnung 120 eine lichte Weite auf, die bei gleicher Temperatur von Hebel 110 und Lagerbauteil 130 größer ist als eine lichte Weite der Öffnung 120 zur Aufnahme des Lagerbauteils 130. Vorteilhaft ist an den vorgesehenen Kontaktstellen 132, 134, 136 von Lagerbauteil 130 und Hebel 110 die Kontur von Öffnung 120 und Lagerbauteil 130 gleich.

Die Welle-Nabe-Verbindung 100 erlaubt eine einfache Montage. Zum Einsetzen des Lagerbauteils 130 in die Öffnung 120 wird eine Temperaturdifferenz zwischen den beiden Verbindungspartnern hergestellt dergestalt, dass das Lagerbauteil 130 gegenüber der Öffnung 120 schrumpft. Gleichen sich die Temperaturen der beiden Verbindungspartner Hebel 110 und Lagerbauteil 130 wieder aneinander an, expandiert das Lagerbauteil 130 und wird fest in die Öffnung 120 eingepresst.

Durch die Polygonzug-Außenkontur des Lagerbauteils 130 und dem Polygonzug der Öffnung 120 stellt sich ein vorteilhafter selbstzentrierender Formschluss und Kraftschluss mit sehr geringer Kerbwirkung ein. Mit der Welle-Nabe-Verbindung 100 können sehr hohe Drehmomente bei guten dynamischen Eigenschaften übertragen werden.

## Patentansprüche

1. Pleuel (200) mit einer variablen Pleuellänge für eine Brennkraftmaschine mit variabler Verdichtung umfassend eine Welle-Nabe-Verbindung (100) mit einem Hebel (110) und einem in einer Öffnung (120) des Hebels (110) angeordneten, als Exzenter ausgebildeten Lagerbauteil (130) des Pleuels (200), **dadurch gekennzeichnet, dass** die Öffnung (120) so ausgestaltet ist, dass drei Kontaktstellen (132, 134, 136) zwischen Hebel (110) und Lagerbauteil (130) ausgebildet sind und zwischen jeweils zwei Kontaktstellen (132, 134, 136) ein Freiraum (122, 124, 126) ausgebildet ist, an dem die Öffnung (120) vom Lagerbauteil (130) gezielt beabstandet ist, wobei die Öffnung (120) als Polygonzug ausgebildet ist und das Lagerbauteil (130) eine als Polygonzug ausgebildete Außenseite aufweist, wobei der Polygonzug der Außenseite des Lagerteils (130) weniger von einer Kreisform abweicht als der Polygonzug der Öffnung (120) .

2. Pleuel (200) nach Anspruch 1, **dadurch gekennzeichnet, dass** die Öffnung (120) einen Dreiecksgrundriss aufweist, insbesondere einen Dreiecksgrundriss mit gerundeten Ecken.

3. Pleuel (200) nach Anspruch 2, **dadurch gekennzeichnet, dass** das Lagerbauteil (130) einen Dreiecksgrundriss aufweist, insbesondere einen Dreiecksgrundriss mit gerundeten Ecken.

4. Pleuel (200) nach einem der vorhergehenden Ansprüche, wobei **dadurch gekennzeichnet, dass** das Lagerbauteil (130) vor dem Einsetzen in die Öffnung (120) einen Außendurchmesser aufweist, der bei gleicher Temperatur von Hebel (110) und Lagerbauteil (130) größer ist als eine lichte Weite der Öffnung (120) zur Aufnahme des Lagerbauteils (130).

5. Pleuel (200) nach einem der vorhergehenden Ansprüche, **dadurch gekennzeichnet, dass** das Lagerbauteil (130) in die Öffnung (120) eingeschrumpft ist.

6. Pleuel (200) nach einem der vorhergehenden Ansprüche, **dadurch gekennzeichnet, dass** das Lagerbauteil (130) eine geschliffene Außenfläche aufweist.

7. Pleuel (200) nach einem der vorhergehenden Ansprüche, **dadurch gekennzeichnet, dass** das Lagerbauteil (130) aus einem hochfesten Stahl gebildet ist.

## Claims

1. Connecting rod (200) having a variable connecting rod length for an internal combustion engine with variable compression comprising a shaft/hub connection (100) with a lever (110) and a bearing component (130) of the connecting rod (200), which bearing component (130) is arranged in an opening (120) of the lever (110) and is configured as an eccentric, **characterized in that** the opening (120) is configured in such a way that three contact points (132, 134, 136) are configured between the lever (110) and the bearing component (130), and a clearance (122, 124, 126) is configured between in each case two contact points (132, 134, 136), at which clearance (122, 124, 126) the opening (120) is spaced apart from the bearing component (130) in a targeted manner, the opening (120) being configured as a polyline, and the bearing component (130) having an outer side which is configured as a polyline, the polyline of the outer side of the bearing part (130) deviating from a circular shape to a lesser extent than the polyline of the opening (120).

2. Connecting rod (200) according to Claim 1, **characterized in that** the opening (120) has a triangular outline, in particular a triangular outline with rounded corners.

3. Connecting rod (200) according to Claim 2, **characterized in that** the bearing component (130) has a triangular outline, in particular a triangular outline with rounded corners.

4. Connecting rod (200) according to one of the preceding claims, **characterized in that**, before the insertion into the opening (120), the bearing component (130) has an external diameter which, in the case of an identical temperature of the lever (110) and the bearing component (130), is greater than a clear span of the opening (120) for receiving the bearing component (130).

5. Connecting rod (200) according to one of the preceding claims, **characterized in that** the bearing component (130) is shrunk into the opening (120).

6. Connecting rod (200) according to one of the preceding claims, **characterized in that** the bearing component (130) has a ground outer face.

7. Connecting rod (200) according to one of the preceding claims, **characterized in that** the bearing component (130) is formed from a high strength steel.

## Revendications

1. Bielle (200) avec une longueur de bielle variable pour un moteur à combustion interne à compression variable, comprenant une liaison arbre-moyeu (100) avec un levier (110) et un composant de palier (130) de la bielle (200) disposé dans une ouverture (120) du levier (110) et réalisé sous forme d'excentrique, **caractérisée en ce que** l'ouverture (120) est configurée de telle manière que trois points de contact (132, 134, 136) soient formé,s entre le levier (110) et le composant de palier (130) et qu'un espace libre (122, 124, 126) soit formé chaque fois entre deux points de contact (132, 134, 136), auquel l'ouverture (120) est espacée de manière appropriée du composant de palier (130), dans laquelle l'ouverture (120) a la forme d'un tracé polygonal et le composant de palier (130) présente un côté extérieur en forme de tracé polygonal, dans laquelle le tracé polygonal du côté extérieur du composant de palier (130) s'écarte moins d'une forme circulaire que le tracé polygonal de l'ouverture (120).

2. Bielle (200) selon la revendication 1, **caractérisé en ce que** l'ouverture (120) présente un contour triangulaire, en particulier un contour triangulaire avec des sommets arrondis.

3. Bielle (200) selon la revendication 2, **caractérisée en ce que** le composant de palier (130) présente un contour triangulaire, en particulier un contour triangulaire avec des sommets arrondis.

4. Bielle (200) selon l'une quelconque des revendications précédentes, **caractérisée en ce que** le composant de palier (130) présente avant son introduction dans l'ouverture (120) un diamètre extérieur qui, à la même température du levier (110) et du composant de palier (130), est plus grand qu'une largeur libre de l'ouverture (120) destinée à recevoir le composant de palier (130).

5. Bielle (200) selon l'une quelconque des revendications précédentes, **caractérisée en ce que** le composant de palier (130) est fretté dans l'ouverture (120) .

6. Bielle (200) selon l'une quelconque des revendications précédentes, **caractérisée en ce que** le composant de palier (130) présente une surface extérieure polie.

7. Bielle (200) selon l'une quelconque des revendications précédentes, **caractérisée en ce que** le composant de palier (130) est formé en un acier à haute résistance.
